Europäisches Patentamt

European Patent Office

Office européen des brevets

(19)

(11) Publication number: **0 067 493**
A1

## (12) EUROPEAN PATENT APPLICATION

(21) Application number: **82200743.1**

(22) Date of filing: **16.06.82**

(51) Int. Cl.³: **B 65 G 59/10**
**B 65 B 35/44**

(30) Priority: **17.06.81 NL 8102912**

(43) Date of publication of application:
**22.12.82 Bulletin 82/51**

(84) Designated Contracting States:
**AT BE CH DE FR GB IT LI NL SE**

(71) Applicant: **Moba Holding Barneveld B.V.**
**Stationsweg 117**
**NL-3771 VE Barneveld(NL)**

(72) Inventor: **Van Kattenbroek, Hendrik Jan**
**Potgieterstraat 49**
**NL-3771 GW Barneveld(NL)**

(74) Representative: **De Wit, Gerard Frederik, Ir. et al,**
**Octrooi- en Merkenbureau De Wit B.V. Breitnerlaan 146**
**NL-2596 HG Den Haag(NL)**

(54) **Denesting device.**

(57) A denester having a number of members such as supporting members (22), separator members (5), lifting members (36), gripper members (34), load reducing members (76'), article removing members (74), and so on, the denester being adapted to handle articles of quite different shapes and dimensions by adjustment means being mounted between the related member and its drive, so that a simple construction is possible, in many cases a spring snap construction or scale display means being used for reproduceably adjusting the members.

FIG. 1

EP 0 067 493 A1

Croydon Printing Company Ltd.

## Denesting device.

The invention relates to devices for denesting nested articles from a stack. Such articles may be egg trays or other packages and made from different materials, such as pulp, paper, carton or plastics. A first problem to deal with when designing such denesters is to prevent failure in case the articles show deviations in form, dimensions, material characteristics and/or stick together in a more than normal way. A second problem is to prevent damage to the articles. Solutions for these problems have been suggested in a number of patent publications, for instance the Dutch Patent Applications 8003200 and 6611765, the United States Patents 3,187,942 and 3,664,521; the Swiss Patent 467,712 and the German Offenlegungsschrift 2,246,944.

The invention aims to provide a solution for another problem namely the adaption of a denester to trays and packages of different shapes and dimensions. The only endeavour to solve this problem known to applicant is a commercially available denester in which members that have to cooperate with the articles can be replaced by differently shaped members. Because of the very high number of types of packages and trays available for for instance eggs, this solution is not always applicable. Further it may be rather time consuming, specially for denesters having many types of members to work on the stack. Up till now denesters have been devised having members for supporting the lower side of the stack, for separating one or more of the lowest articles from the stack, for lifting the stack, for reducing the weight load of the stack, for removing a denested article for gripping and/or pressing down the article to be denested and so on.

When trying to provide a solution with a rather simple construction and having many adaptation possibilities an important insight on which this invention partly is based is that adjustment of the mechanism driving the several means often is very complicated.

In a device for denesting a stack of nested articles, provided with supporting members which are movable in a direction perpendicular to the stack and connected to a driving means which is designed to move them to and fro in the said direction perpendicular to the stack, separator members which are mounted movably in a direction perpendicular to said stack and connected to a second driving means for moving them to and fro in the last mentioned direction perpendicular to the stack, the invention provides on base of this insight a simple and very flexible solution in that at least one type of members out the group of the supporting members and the separator members are connected to their driving means by a coupling means that is adjustable in the related direction of movement perpendicular to the stack.

In order to reduce the number of adjustments to one for each member it is preferably provided that at least one of the said type of members is at one side slidably connected to a fixed linear guide means and at the other side borne by a bearing surface extending parallel to said guide means.

When applying the invention it is preferred that the cross-section of the stack is mainly rectangular, linear guiding means for guiding the related members extending themselves along a first side of said cross-section, the said type of members cooperating with the guiding means extending themselves along a side perpendicular to said first side. These means for reproduceably adjustment may for instance consits of a scale indicator or a spring snap means.

In many instances a denesting device is provided with gripper means for gripping the article to be denested. The cited Dutch Patent Application 6611765 shows gripper means which are mounted to parallel rods, so that in principle adjustment along these rods is possible. The invention provides, however, a gripper construction that is able to engage the article in any place, so that adaption to very many articles to be gripped is possible.

This object is reached in that said gripper means are adjustable along beams, said beams being supported by controlled mounting means for movable gripper beam supports, said supports being adjustable on longitudinal guide and support means extending in a direction perpendicular to said beams. In combination with the earlier cited features of the invention it is possible to obtain a denesting device in which as well the supporting and separator means as the gripper means are adaptable to any article to be denested. If the height position of the supporting and/or separator means has to be adjusted as well with respect to each other as with respect to the gripper means one may use replaceable members as is known per se.

Some known denesting devices show lifting means to lift the stack somewhat in order to facilitate the activity of other means such as the supporting and/or the separatur means. If such a device contains controlled mounting means for the gripping means it is according to a further elaboration of the invention provided that the controlled mounting means support the lifting members. The adaption of the mounting means has appeared to be in very many cases identical to the desired one of the lifting means, so that the above feature provides a simple and efficacious solution.

In some instances a denesting device is provided for denesting a stack of nested articles, provided with supporting members which are movable in a direction perpendicular to the stack and connected to a driving means which is designed to move them to and fro in the said direction perpendicular to the stack, separator members which are mounted movably in a direction perpendicular to said stack and connected to a second driving means for moving them to and from in the last mentioned direction perpendicular to the stack, provided with load reducing means cooperating with the stack at a level above the said supporting or separator members. A simple and sufficient solution for adjusting such load reducing means consists in that said load reducing means are mounted to pivotable arms mounted to controllable rotary shafts, the angular position of the said arms with respect to said rotary shafts being adjustable and the connection between the load reducing means and the arms being somewhat flexible.

In case the denesting device contains an article removing means provided with a driving means and a means for engaging a denesting article it is preferably provided that the location of said engaging means with respect to said driving means is adjustable in at least wo stable positions, a spring means being present for biasing the said engaging means toward the stable positions.

It will be clear that this idea of stable adjustable positions is very important to make sure, that the device according the invention always is in the exact position desired for handling a certain article. Accordingly a final but important aspect of the invention is with a device for denesting articles with at least one of the types of means from the group: supporting means for supporting the lowermost article; separator means for separating one or more articles at the end of the stack from the stack; gripper means for gripping at least the last article of the stack; lifting means for lifting the stack; load reducing means for reducing the weight load exerted by said stack and article removing means, that at least one t pe of the said means is adjustable in at least two stable positions in order to accommodate articles of different shapes and dimensions.

It is remarked that in the description of some shown embodiments of the invention several adjustment menthods for several adjustable means of the device have been depicted, but that in principle the one adjustment method of the one means can be used for the other without leaving the domain of the invention.

The invention in the following is elucidated on hand of the drawing in which an ambodiment of the invention has been shown.

In the drawing show:

Figure 1 schematically a plan view of an embodiment of the invention;

Figure 2 a front view of devices designed for egg trays;

Figure 3 a side view, also designed for egg trays;

Figure 4 a further elaboration of the grippers in frontal view;

Figure 5 a further elaboration of the grippers in side view;

Figure 6 a frontal view of the device designed for small packages;

Figure 7 a side view corresponding to figure 6;

Figures 8, 9, 10 and 11 details of the devices shown in figures 1-7 inclusive; and

Figure 12 a time graph of the movement of several parts.

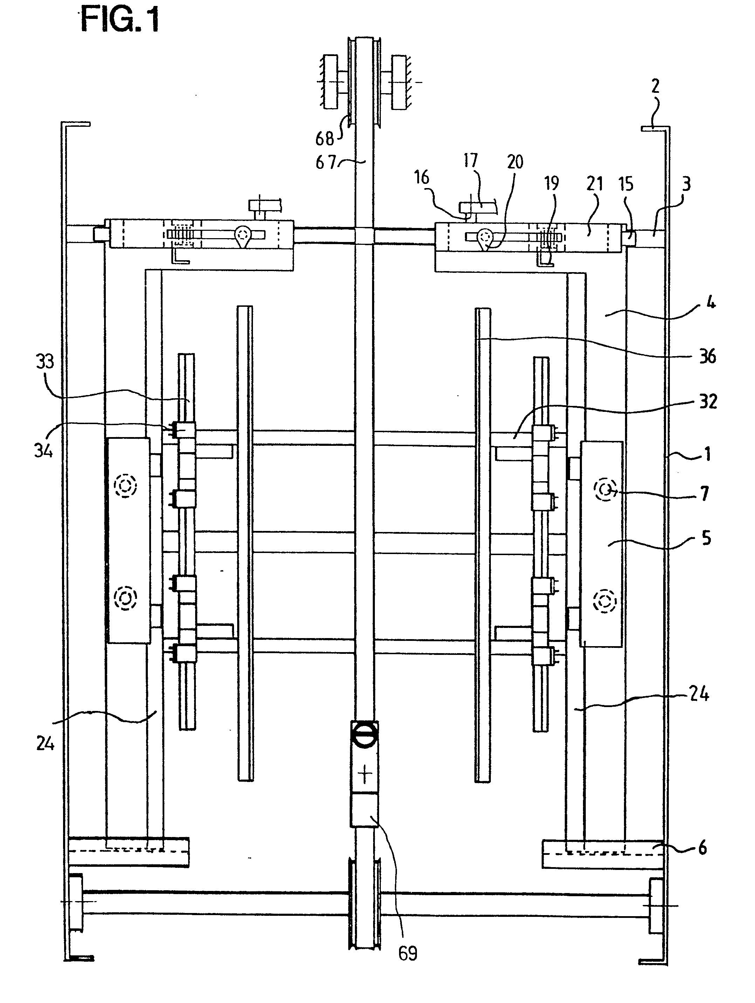

In fig. 1 a fixed frame is constructed from end sheets 1 and flanges 2.

Fixedly connected to these end sheets are rods 3, which bear mounting members 4 for separator members 5. These mounting members 4 are at their opposite ends supported by fixed bearing members 6, which mounting allows for movement toward the sheet 1 and away from it. The separator members 5 are mounted by means of pins 7 protruding into holes in blocks 8 connected to the mounting members 4 and have downwardly extending parts 9 and horizontally protruding lips 10, which can be shifted between the edges of the lowermost and the lowermost but one egg tray 11 and 12 respectively.

A set of two small guide blocks 13 is fixedly connected to the mounting members 4, as well as a small block 14 provided with a helical clamping spring. Through the blocks 13 and 14 a rod protrudes which by means of a transverse arm 16 is connected to a driving member 17. As already stated a helical spring is present in block 14, one terminal 18 of which engaging the block and its other terminal 19 of which being bent away and protruding. By pressing on this end the spring is somewhat unwound so that the block 14 and therewith the complete mounting member 4 can slide with respect to the rod 15. In this way with an extremely simple construction is obtained that the location of the separator members 5 in the direction toward the stack and away from it can be determined when maintaining completely the driving mechanism for the members.

For simplifying the adjustment further a pointer 20 is coupled to the rod 15 and able to cooperate with a non shown indicator scale applied to the upper side of a cover 21 mounted on the small blocks 13.

Of course it is possible to use other means for connecting the block 14 to the rod 15, for instance a spring biased pin in block 14 being urged toward rod 15, the latter being provided with recesses at predetermined locations for receiving the pin's end. A well known adjustment screw is a further evident possibility.

With the depicted construction in principle each desired position of the separator members can very quickly be adjusted, whereas, if another shape and/or height of these members is necessary they can easily be removed by lifting them with their pins 7 out of the holes in blocks 8 and to mount other members. Herewith it is pointed to the fact that the separator members should have the possibility of a shape that is adapted to that of the packages, namely if the edges of the articles do not run according to straight horizontal lines.

Though a simple pin and hole connection may be satisfactory it will be clear that any fixation means of the separator members to the mounting members may be used, for instance spring biased pins or rods snapping behind parts such as the blocks 8 connected to the mounting members 4.

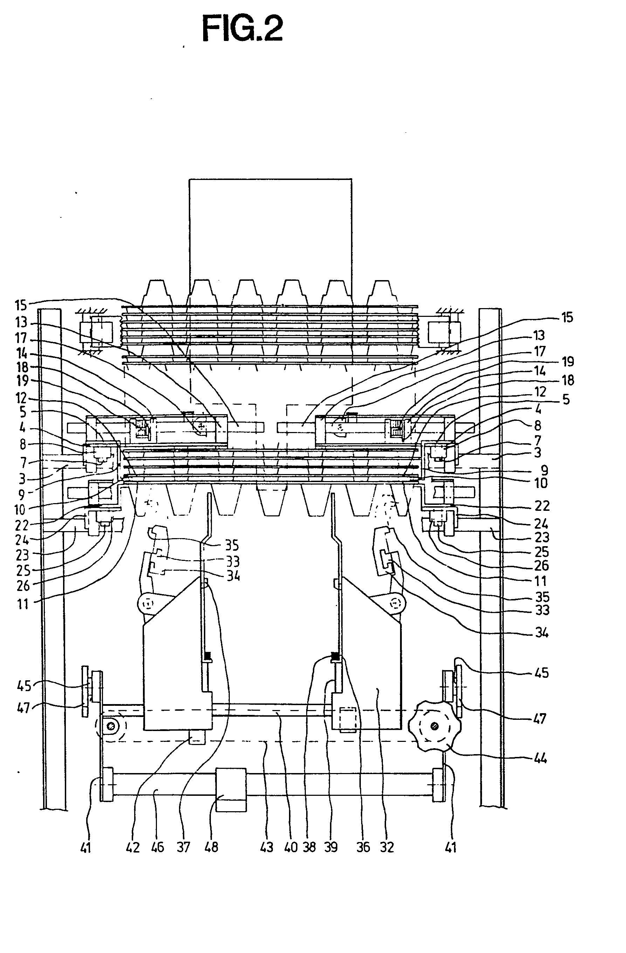

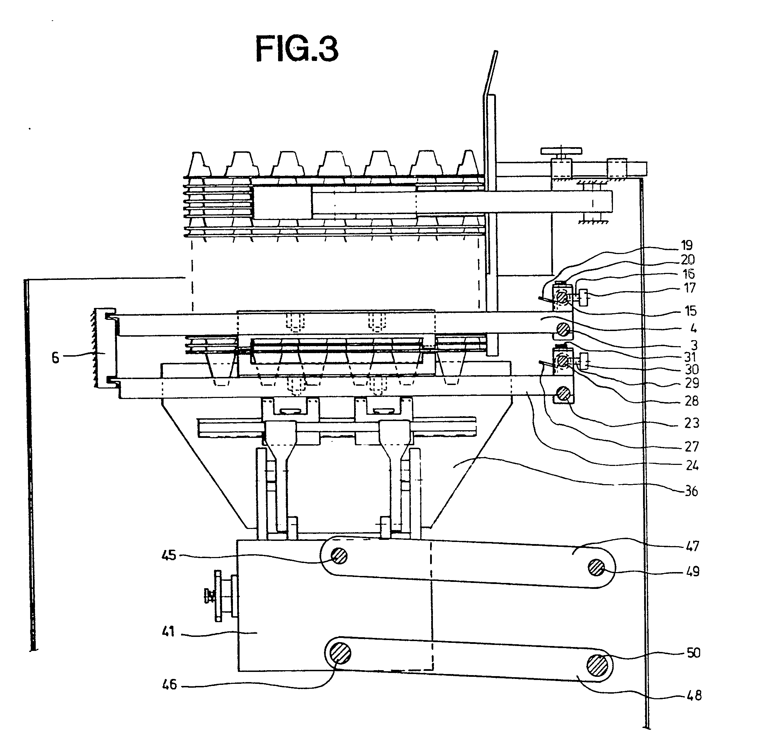

Below the separator members supporting members 22 are located which themselves are mounted in a completely corresponding way. For that reason mounting members 24 rest on a rod 23 and a further guide slit in the bearing member 6. The supporting members 22 are again by means of pins 25 put into blocks 26 and fixed in this way. For clearity's sake in fig. 2 no complete repetition is shown of the small block corresponding to small block 14, but in fig. 3 clearly the same mounting is visible with again a terminal 27 of a helical spring enabling decoupling from a rod 28 that by means of a transverse rod 29 is connected to a driving member 30. Also here a pointer 31 is present to display the adjusted position and a further explanation is deemed to be superfluous in view of the correspondence with the device for the separator members.

It is pointed to the fact that as well the separator members as the supporting members are mounted by means of pins, namely 7 and 25 protruding into holes. Of course each further fixation, for instance with a spring clip or such like can be applied, if desired. By reason of this they are easily replaceable. Of course it is possible to shape a mounting member such that it can serve the purpose of separator or supporting member for a certain package. This has been applied for small packages by reason of which the mounting members 24 fullfil the task of the supporting members 22.

It is remarked that when adjusting the denester no packing material is in the device so that it is easily accessible from the inner side and the spring terminals 19 and 31 can easily be served.

In fig. 1 further a set of four gripper supprts 32 has been shown which support a movable beam 33 on which gripper blocks 34 are located which at their upper ends support prick pins 35. The gripper supports 32 bear also lift members in the form of sheets 36, which by means of a hole provided with a slit at their upper side are mounted to a mounting hook 37 and at their lower side are kept on their place by a spring 38 mounted around a rod 39.

The gripper supports 32 can (vide fig. 2) slide on guide rods 40 which are fixedly mounted in a frame that can move up and down and is indicated with its end sheets 41. The gripper supports 32 are provided with adjustment blocks 42 connected to an endless belt 43 wherewith the one block is connected to the upper web of this belt and the other block with the lower web, so that with displacement of this belt about its end rollers by activation of hand knob 44 the gripper supports move symmetrically toward the centre of the stack or away from it.

The movable frame 41 is upported by pivots or shafts 45 and 46, connected to levers 47 and a single lver 48, which can pivot about shafts 49 and 50 respectively, mounted to the fixed frame. For simplicity's sake in fig. 2 the shaft 49 and the shaft 50 are not shown.

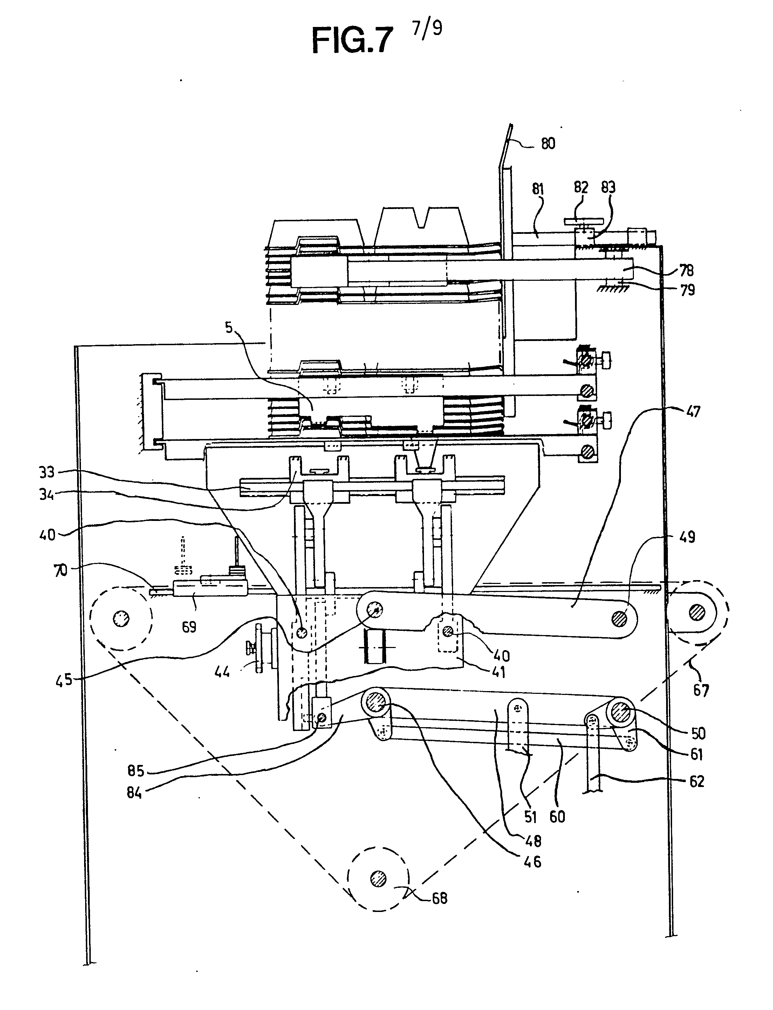

The movable frame formed by the end sheets 41 can be moved up and down, because the levers 48 can be pivoted up and down with a driving member 51 shown in fig. 7 only.

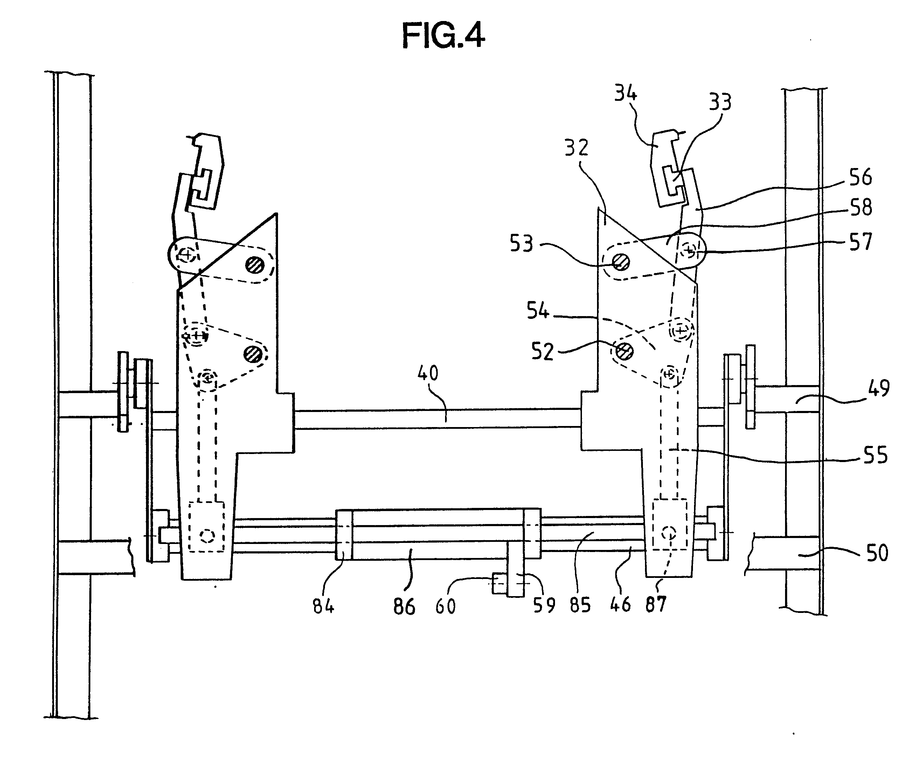

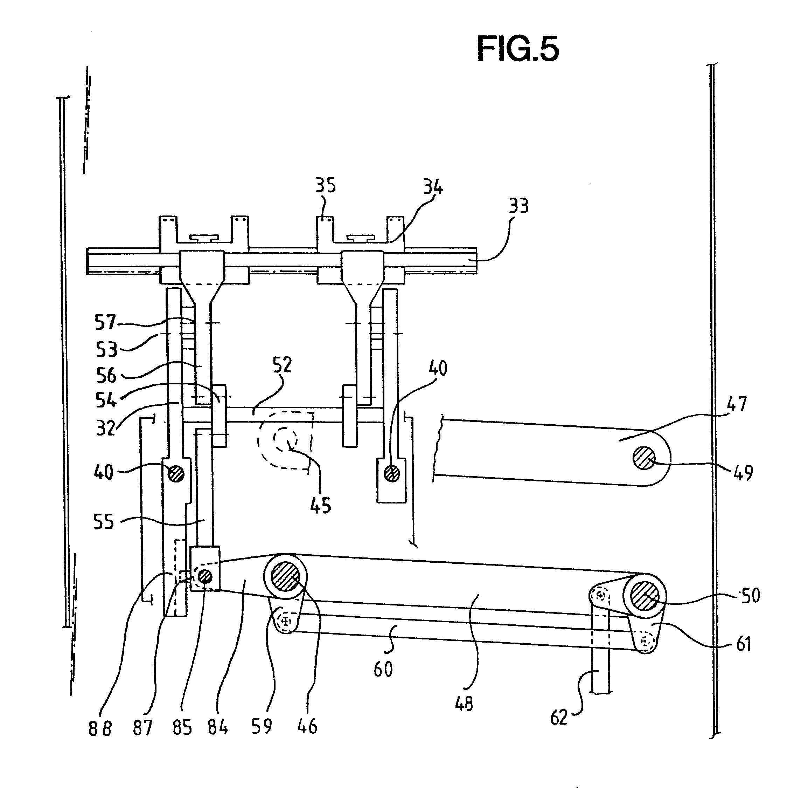

To elucidate the adjustability and the activation of the grippers reference is made fo fig. 4 and 5.

As appears from these figures the gripper supports 32 are provided with pivot shafts 52 and 53. The lower pivot shaft 52 supports a triangular member 54, that at its lower side is linked to an actuating rod 55 and at its upper side by means of a pivot connection is linked to an upwardly extending arm 56, which via a pivot 57 and a link 58 is connected to pivot 53. The shown construction is such that when the actuating rod 55 is moved upward the triangle 54 rotates, wherewith, however, because the distance from pivot 52 and the pivot pertaining to the triangle 54 and the arm 56 is smaller than that between the pivots 53 and 57, the gripper members at the end of their upward movement carry out a movement having a considerable horizontal component. This movement has been schematically indicated in fig. 2 with a dash-dot line.

The activation of the grippers occures by means of levers 84 pivotable about shaft 46 and cooperating at the one hand via a rod 85 with the gripper actuating rods 55 and at the other hand via a sleeve 86 with an arm 59 and a link 60, which via a knee lever 61 which is rotatable about the shaft 50 is coupled to a gripper activating member 62. The gripper rod 55 is at its lower side somewhat pivotably connected to a block mounted on shaft 85 and provided with a nose 87 fitting in a slit 88 applied in gripper support 32.

When without movement of the gripper activating member 62 the levers 48 and 47 are pivoted upwardly no angular change of the lever 84 with respect to the arm 48 occurs, because 61, 60 and 59 form a parallelogram, so that with moving up and down of the frame 41 no activation of the gripper occurs. If. however, the gripper activating member 62 is moved upwardly, also lever 84 will move upwardly by reason of which the grippers as a unit go upward and at the end of this movement sway away for gripping either the protrusions of an egg tray or the edge of a small package.

The gripper supports 32 are, as indicated, displaceable on the rods 40, whereas the gripper members 34 are displaceable on the beams 33. This means that adjustment of the position of the grippers in two mutually perpendicular directions is possible.

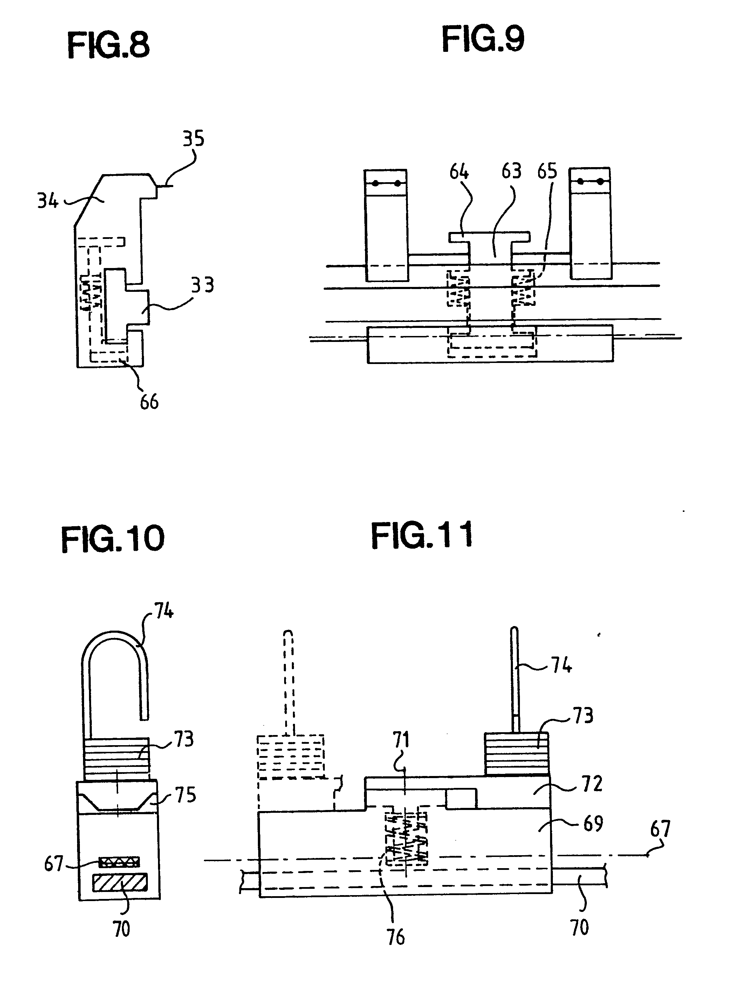

The adjustment of the blocks 34 on the beams 33 is schematically further elucidated on hand of fig. 8 and 9. The block 34 has an undercut groove in which a flange of the beam 33 is located. In the block a spring mounted member 63 is present which at its upper side has an activating surface 64, is biased upwardly by springs 65 and at its lower side is provided with a horizontal protrusion 66 that at its upper side is toothed and cooperates with a toothed surface at the lower side of the beam 33. Consequently by pressing on part 64 the block 34 can be slided on the beam 33 wherewith it is fixed again after 64 is relinguished. Of course on the beam 33 indicators can be applied to indicated the right position.

The device according the invention further contains a removing device to carry off horizontally an object which has been loosened from the stack and moved downward. Therefor an endless belt 67 (vide fig. 7) has been applied, which runs over three rollers 68 of which at least one is drivable in two directions. This belt supports a block 69 which can slide to and fro on a guide rod 70. On this block a lever 72 is pivotable about a pivot 71 and at its end provided with a helical spring the end 74 of which is bent upwardly and back again. The arm 72 is axially displaceable against the action of a spring 76 about pivot 71 and in the indicated position is kept on its place by means of a V-shaped cross-section of its lower side and the part 75 of the block 69. By pivoting the part 72 with force it will against the action of the spring 76 that urges it toward the block 69 be brought out of the recess in the part 75 of the block 69 and can be brought into the position indicated in fig. 11, in interrupted lines. This means that the stroke of movement of the block remains the same, it is true, but that the removing member 74 very easily can be adjusted in two different positions.

As already mentioned earlier the shown device contains load reducing members 76' which at their side opposing the stack are toothed, as is indicated at 77.

These load reducing members are attached to arms 78 pivotable about shafts 79. By means of a non shown construction the angular position of the arm 78 about the axis of the shaft 79 is adjustable and this shaft is rotatably driven to press the members 76' against the edges of the packages. Therewith it is possible to mount the members 76' somewhat elastically with respect to the arms 78 to cause the knurled edges 77 to engage well the edges of the stack of objects.

In order to facilitate application of the articles, specially if articles of different dimensions have to be put in, which have to lay at a predetermined location, the invention further provides a guide sheet 80 which by means of rods 81 and by means of a hand-actuated screw 82 is fixable in a guide 83.

The load reducing members consequently serve two purposes: the first being to support the part of the stack above them, so that the load of the stack resting on the supporting and the separator members is reduced and secondly to form an adjustable localisation means for the stack in the direction perpendicular to the sheets 80.

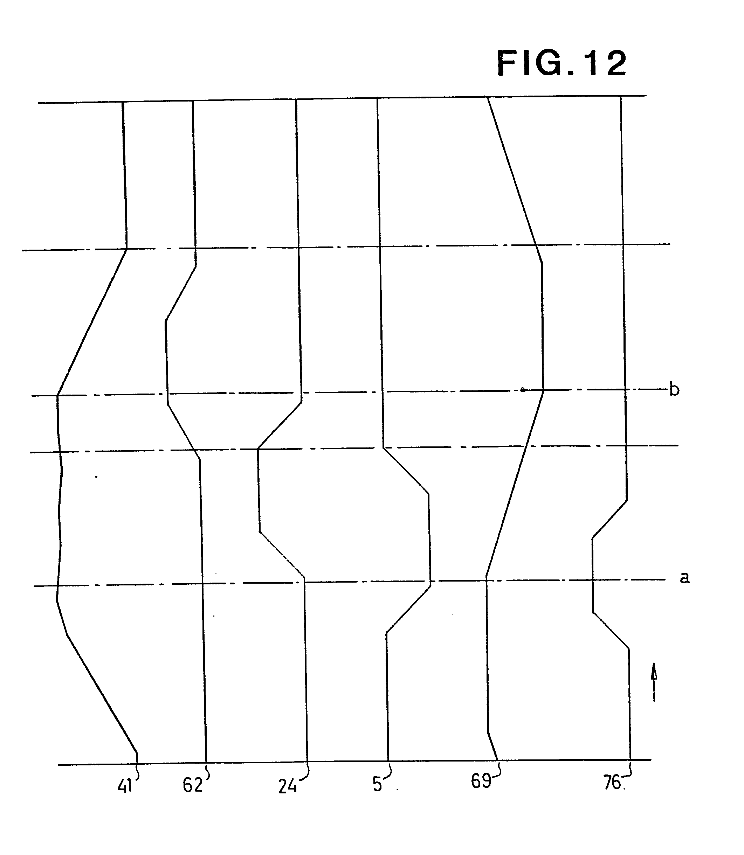

The working of the depicted device is further elucidated on hand of fig. 12. In this figure a time graph is indicated of the positions of the different members. For clearity's sake the shown graphs are indicated with the references of the parts of which they show the position. In this way the upper graph shows the height position of the frame 41; the graph there below the vertical movement of the activation member 62 of the grippers; the graph there below the position of the supporting members 22 or the mounting members 24 therefor, a leftward deviation indicating that they are inside the stack; the graph indicated with 5, the position of the separator members the rightward deviation meanting that they are outside the stack; the graph 69 the position of the block 69 the leftward position indicating that the removing spring 74 is outside the region of the packages, in the positions more to the right within this region and in the most rightward position again outside it; and the most rightward graph the movement of the load reducing members 76', wherewith these members are inactive in the rightward parts of the graph.

The working cycle of the described device is the following: At the moment a the device is put in action the stack still rests on the lifting members 36 and the frame is almost in its highest position. The frame starts to lower very slowly, wherewith the separator members are outside the stack so that the supporting members 22 (or their mounting members 24) fullfil their task and with a somewhat further lowering of the stack support the lowermost article. In this position the separator members 5 are brought into the stack, after which also the grippers have become active because the activation member 62 was activated before the position b is reached. In the time period from a to b the block 69 which had removed a previous tray has returned completely and is located at the other side of the surface area covered by the stack. Now frame 41 begins to lower strongly, wherewith the separator members 5 see to it that only one object is taken along, the load reducing members 76' being active for having the separator members not loaded too heavy.

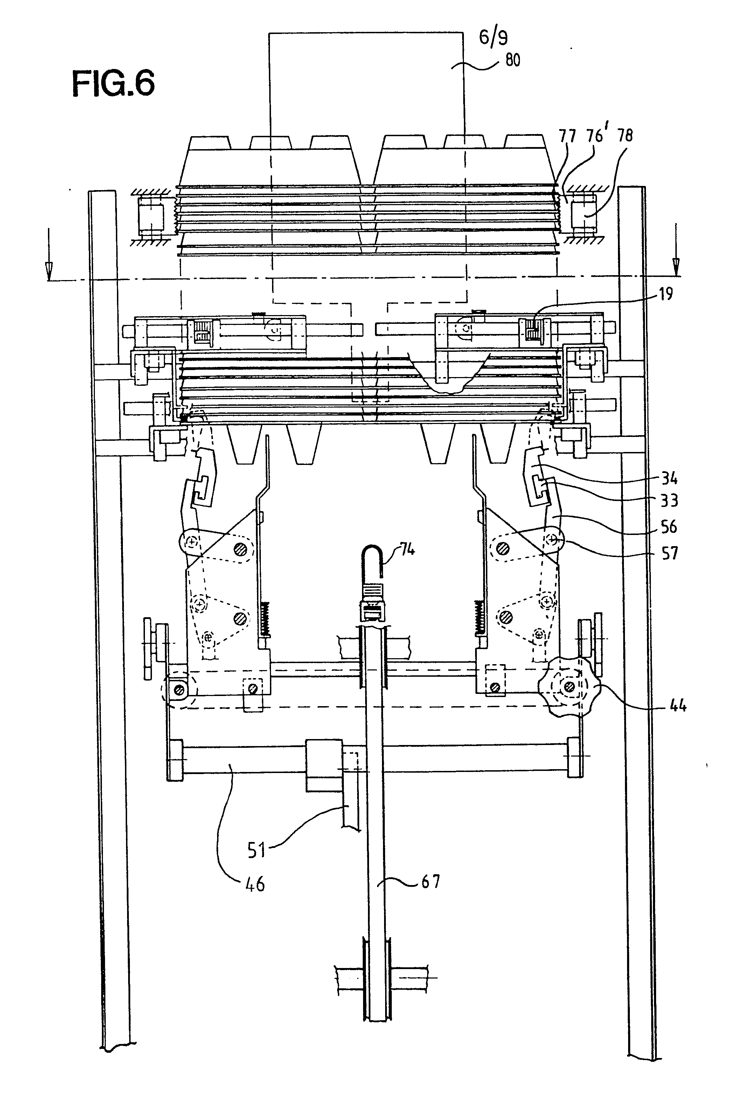

As more specifically appears from fig. 7 the separator members 5 may have lips which are located at different heights for adaption to the cross-sectional shape of the edge of a package, in this case (fig. 6 and 7) an egg's box with two rows of six eggs.

In some cases with small packages the mounting member 24 is active as supporting member 22 as is the case in fig.6 and 7.

The invention provides a denester that in a very quick and easy way can be adapted to a very large number of trays and packages, mostly at least some and preferably all or almost all members to be adjusted being provided with spring means, allowing a light loosening and a refixing in an easy and reproduceable form.

The references indicated in the appending claims only serve the purpose of elucidation. In no way they are intended or can be interpreted as a limitation of the said claims.

Claims:

1. Device for denesting a stack of nested articles, provided with supporting members (22) which are movable in a direction perpendicular to the stack and connected to a driving means (3) which is designed to move them to and fro in the said direction perpendicular to the stack, separator members (5) which are mounted movably in a direction perpendicular to said stack and connected to a second driving means (17) for moving them to and fro in the last mentioned direction perpendicular to the stack, characterized in that at least one type of members out the group of the supporting members (22) and the separator members (5) are connected to their driving means (30, 17) by a coupling means (29, 28,27; 16, 15, 14, 19) that is adjustable in the related direction of movement perpendicular to the stack.

2. Device according to claim 1, characterized in that at least one of the said type of members is at one side slidably connected to a fixed linear guide means (23, 3) and at the other side borne by a bearing surface (in 6) extending parallel to said guide means.

3. Device according to claim 1 or 2, characterized in that the cross-section of the stack is mainly rectangular, linear guiding means for guiding the related members extending themselves along a first side of said cross-section, the said type of members cooperating with the guiding means extending themselves along a side perpendicular to said first side.

4. Device according to one or more of the preceding claims, characterized in that means (20, 21, 31) for reproduceable adjusting at least one type of members out of the group of supporting and separator members are present.

5. Device for denesting a stack of nested articles, provided with supporting members (22) which are movable in a direction perpendicular to the stack and connected to a driving means (3) which is designed to move them to and from in the said direction perpendicular to the stack, separator members (5) which are mounted movably in a direction perpendicular to said stack and connected to a second driving means (17) for moving them to and fro in the last mentioned direction perpendicular to the stack and gripper means (34) movable up and down and provided with activating means (62, 61, 60, 59, 84, 85, 55) for letting the gripper means carry out an at least partly horizontal movement for gripping portions of the articles, said gripper means being adjustable in at least one direction, characterized in that said gripper means (34) are adjustable along beams (33), said beams being supported by controlled mounting means (32) for movable gripper beam supports (56), said supports being adjustable on longitudinal guide and support means (40) extending in a direction perpendicular to said beams.

6.   Device according to claim 5, characterized in that the said controlled mounting means (40) are mounted in a frame (41) that by means of a first parallelogram mechanism (45, 46, 47, 48, 49, 50) is vertically movable, a second parallelogram mechanism having two pivots (46, 50) in common with the said first parallelogram mechanism and being connected to a longitudinal activation transmission member 85 parallel to said guide and support means (40), activating means (55) for said gripper means being adjustably mounted to said activation transmission member (85).

7.   Device according to claim 5 having lifting members (36) for the stack, characterized in that the controlled mounting means (32) support the lifting members.

8.   Device according to claim 7, characterized in that the lifting means are adjustably mounted to said controlled mounting means such that they can take at least two predetermined stable height positions.

9.   Device for denesting a stack of nested articles, provided with supporting members (22) which are movable in a direction perpendicular to the stack and connected to a

-3-

0067493

driving means (3) which is designed to move them to and fro in the said direction perpendicular to the stack, separator members (5) which are mounted movably in a direction perpendicular to said stack and connected to a second driving means (17) for moving them to and fro in the last mentioned direction perpendicular to the stack, provided with load reducing means cooperating with the stack at a level above the said supporting or separator members, characterized in that said load reducing means (76') are mounted to pivotable arms (78) mounted to controllable rotary shafts (79), the angular position of the said arms with respect to said rotary shafts being adjustable and the connection between the load reducing means and the arms being somewhat flexible.

10. Device for denesting a stack of nested articles, provided with supporting members (22) which are movable in a direction perpendicular to the stack and connected to a driving means (3) which is designed to move them to and fro in the said direction perpendicular to the stack, separator members (5) which are mounted movably in a direction perpendicular to said stack and connected to a second driving means (17) for moving them to and fro in the last mentioned direction perpendicular to the stack and provided with an article removing means provided with a driving means (67) and a means (74) for engaging a denested article, characterized in that the location of said engaging means (74) with respect to said driving means is adjustable in at least two stable positions, a spring means (76) being present for biasing the said engaging means toward the stable positions.

11. Device for denesting articles from a stack provided with at least one of the types of means from the group: supporting means for supporting the lowermost article; separator means for separating one or more articles at the end of the stack from the stack; gripper means for gripping at least the last article of the stack; lifting means for lifting the stack; load reducing means for reducing the weight load exerted by said stack and article removing means, characterized in that at least one type of the said means is adjustable in at least two stable positions in order to accommodate articles of different shape and dimensions.

## FIG.1

# FIG.2

# FIG.3

# FIG.4

FIG.5

FIG.6

FIG.7  7/9

0067493

FIG.8

FIG.9

FIG.10

FIG.11

# FIG.12

0067493

European Patent Office

**EUROPEAN SEARCH REPORT**

Application number

EP 82 20 0743

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| D,X | NL-A-6 611 765 (NEVIS) <br> * Page 5, lines 2-5; page 6, lines 16-20; figures 1,2 * | 1,5 | B 65 G 59/10 <br> B 65 B 35/44 |
| | --- | | |
| D,X | DE-A-2 246 944 (JOSEK) <br> * Page 5, lines 3-13; figure 2 * | 1 | |
| | ----- | | |

|  |
|---|
| TECHNICAL FIELDS SEARCHED (Int. Cl. ³) |
| B 65 G <br> B 65 B <br> G 07 F |

| The present search report has been drawn up for all claims | | |
|---|---|---|
| Place of search <br> THE HAGUE | Date of completion of the search <br> 20-09-1982 | Examiner <br> OSTYN T.J.M. |

EPO Form 1503. 03.82